# FASCICULE DE BREVET EUROPEEN

(11) **EP 4 166 803 B1**
(45) Date de publication et mention de la délivrance du brevet: **06.12.2023**
(21) Numéro de dépôt: 22194567.8
(22) Date de dépôt: 08.09.2022
(51) Int. Cl.: F16C 19/16, B64C 11/32, B64C 27/59, B64C 27/78, F16C 19/18, F16C 19/52, F16C 19/54, F16C 33/58, F16C 33/60

(54) **BOITE DE TRANSMISSION DE PUISSANCE ET AÉRONEF ASSOCIÉ**
GETRIEBE UND ZUGEHÖRIGES FLUGZEUG
GEARBOX AND ASSOCIATED AIRCRAFT

(30) Priorité: 18.10.2021 FR 2111006
(43) Date de publication de la demande: 19.04.2023
(73) Titulaire: Airbus Helicopters, 13725 Marignane Cedex (FR)
(72) Inventeur: ZAMPONI, Laurent, 13127 VITROLLES (FR)
(74) Mandataire: GPI Brevets

(56) Documents cités:
- EP-A1- 3 753 849
- FR-A1- 3 095 481

## Description

La présente invention concerne le domaine des paliers équipant des boîtes de transmission de puissance, de telles boîtes de transmission de puissance, des aéronefs équipés de boîtes de transmission de puissance et des procédés de transmission de puissance.

Plus particulièrement, l'invention se rapporte aux boîtes de transmission de puissance comportant des organes de guidage en rotation d'éléments mobiles en rotation d'un rotor de giravion, de tels organes de guidage permettant également de transmettre des efforts axiaux pour commander par exemple un pas des pales de ce rotor, tel un rotor arrière.

Ces organes de guidages sont en outre soumis à des sollicitations axiales importantes selon deux sens opposés d'une direction confondues avec un axe de rotation des pièces mobiles en rotation. De telles sollicitations peuvent alors générer des dégradations ou une usure au niveau de pistes de roulement de ces organes de guidage.

En outre dans le domaine des aéronefs, il peut être avantageux de détecter ou de mesurer un niveau d'usure ou dégradation d'un tel organe de guidage pour générer une alarme et procéder au remplacement de l'organe de guidage endommagé avant la perte de la fonction.

De manière générale, de tels organes de guidage se présentent sous la forme de roulements à billes et/ou à rouleaux tels que décrits dans les documents EP 3 587 845, EP 3 757 000, EP 3 753 850, EP 3 753 849.

Le document EP 3 587 845 décrit ainsi l'utilisation redondante de deux roulements à billes à contact oblique agencés l'un à côté de l'autre pour qu'en cas de dégradation de l'un des deux roulements l'autre roulement soit toujours opérationnel. Un tel système comporte également une pièce de liaison permettant de transmettre les efforts à l'un ou l'autre des deux roulements à billes à contact oblique. De manière connue, chaque roulement à billes à contact oblique comporte deux rangées de billes agencées coaxialement l'une à côté de l'autre.

En outre, un tel système comporte de nombreuses pièces et est complexe à fabriquer. De plus, ce système peut générer une dissipation thermique importante dans une zone très confinée et difficile à lubrifier.

Les documents EP 3 753 849 et EP 3 753 850 divulguent quant à eux des roulements à billes à contact oblique à deux rangées de billes combinés avec une butée à deux rangées de rouleaux coniques pour transmettre des efforts axiaux selon deux axes opposés.

Un tel système est également muni d'un nombre important de pièces en mouvement et peut éventuellement être complexe à réaliser et à lubrifier.

Il peut en résulter un échauffement important et une dégradation causés par un glissement.

De plus, EP 3 753 849 divulgue une boîte de transmission de puissance selon le préambule de la revendication 1.

Le document EP 3 757 000 décrit quant à lui un premier roulement à billes à contact oblique à deux rangées de billes combiné coaxialement avec un deuxième roulement à deux rangées de rouleaux coniques.

Un système de détection d'usure comportant une pièce martyre et une pièce mobile permet alors de commander mécaniquement le basculement du guidage en rotation du premier roulement vers le deuxième roulement. Un tel système peut être ainsi également complexe à fabriquer et à installer au sein d'une boîte de transmission de puissance.

En outre, le document FR 3095481 décrit un roulement à billes à deux rangées de billes à contact oblique équipant un palier de turbomachine. Ce roulement peut fonctionner selon deux modes de fonctionnement, à savoir un mode normal et mode dégradé.

Dans le mode de fonctionnement dégradé, une première rangée de billes ne permet pas d'empêcher le déplacement axial relatif des bagues interne et externe du roulement dans un premier sens si le roulement est soumis à un effort axial tendant à déplacer axialement les bagues interne et externe l'une par rapport à l'autre dans le premier sens. Des troisièmes pistes sont agencées sur chacune des bagues interne et externe et configurées de sorte qu'une deuxième rangée de billes vienne en contact avec les troisièmes pistes afin de limiter un déplacement axial relatif des bagues interne et externe dans le premier sens.

La présente invention a alors pour objet de proposer une boîte de transmission de puissance comportant un roulement à billes de conception compacte et simplifiée permettant de s'affranchir des limitations mentionnées ci-dessus.

L'invention se rapporte donc à une boîte de transmission de puissance configurée pour transmettre un couple moteur à au moins un rotor muni de pales.

Selon l'invention, une telle boîte de transmission de puissance comporte :
- un roulement à billes à contact oblique comportant une première rangée de billes munie d'une pluralité de billes, une seconde rangée de billes munie d'une autre pluralité de billes, et
- une tige de commande de pas solidaire en translation avec au moins une bague réceptrice du roulement à billes.

En outre, dans un mode de fonctionnement nominal du roulement :
- la première rangée de billes transmet au moins un premier effort axial orienté selon un premier axe depuis au moins une bague émettrice vers au moins une bague réceptrice du roulement à billes, et
- la seconde rangée de billes transmet au moins un second effort axial orienté selon un second axe, opposé au premier axe, depuis la au moins une bague émettrice vers la au moins une bague réceptrice.

Par ailleurs, dans un mode de fonctionnement dégradé du roulement, la première rangée de billes est configurée pour transmettre d'une part le au moins un premier effort axial orienté selon le premier axe et d'autre part le au moins un second effort axial orienté selon le second axe, la seconde rangée de billes transmettant aucun effort axial, le mode de fonctionnement dégradé correspondant à une dégradation d'au moins une piste de roulement de la au moins une bague émettrice ou de la au moins une bague réceptrice venant initialement au contact de l'autre pluralité de billes de la seconde rangée de billes dans le mode de fonctionnement nominal.

Autrement dit, lorsque la deuxième rangée de billes ne permet plus de transmettre un second effort axial selon le second axe suite à une usure ou dégradation, la première rangée de billes permet quant à elle de transmettre ce second effort axial.

Le roulement comporte alors au moins une piste de roulement supplémentaire agencée sur la au moins une bague émettrice du roulement. Cette piste de roulement supplémentaire permet de former un autre contact oblique au niveau de la première rangée de billes pour transmettre des efforts uniquement selon le second axe à l'aide de la au moins une bague émettrice et de la au moins une bague réceptrice et dans le mode de fonctionnement dégradé. Autrement dit, le roulement peut transmettre des efforts axiaux selon deux sens opposés et, dans le mode de fonctionnement dégradé, la première rangée de billes présente alors quatre points de contact, à savoir deux points de contact avec la au moins une bague émettrice et deux points de contact avec la au moins une bague réceptrice. Par ailleurs, le jeu de fonctionnement du roulement est alors fortement augmenté dans ce mode de fonctionnement dégradé.

En outre, la au moins une bague émettrice peut être formée par au moins une bague intérieure du roulement. Dans ce cas, la au moins une bague réceptrice est alors formée par au moins une bague extérieure recouvrant les billes et la ou les bagues intérieures du roulement.

Alternativement, la au moins une bague réceptrice peut être formée par au moins une bague intérieure. Dans ce cas, la au moins une bague émettrice est alors formée par au moins une bague extérieure du roulement recouvrant les billes et la ou les bagues intérieures du roulement.

Un tel roulement permet de réaliser une boîte de transmission de puissance et un aéronef associé avec peu de pièces mobiles et un système de lubrification simple à mettre en oeuvre. En outre, dans un mode de fonctionnement nominal du roulement tous les éléments roulants participent au guidage en rotation des organes mobiles et par conséquent la dissipation thermique d'un tel roulement est minimale.

De plus, de part et d'autre d'un premier plan transversal passant par des centres des billes de la première rangée de billes, la au moins une bague émettrice comporte une première piste de roulement émettrice principale au contact avec la pluralité de billes de la première rangée de billes dans le mode de fonctionnement nominal et une première piste de roulement émettrice secondaire, la première piste de roulement émettrice secondaire étant distante selon un premier jeu fonctionnel prédéterminé non nul de la première rangée de billes dans le mode de fonctionnement nominal, la première piste de roulement émettrice secondaire étant au contact avec la pluralité de billes de la première rangée de billes dans le mode de fonctionnement dégradé lorsque la au moins une bague émettrice est sollicitée par le au moins un second effort axial orienté selon le second axe.

En d'autres termes, la piste de roulement supplémentaire en contact avec la première rangée de billes est formée par la première piste de roulement émettrice secondaire. Un nouveau contact oblique est alors formé si besoin avec les billes de la première rangée et une piste de roulement réceptrice secondaire de la bague réceptrice. Le premier jeu fonctionnel prédéterminé permet alors d'éviter la transmission d'un second effort axial selon le second axe dans la première rangée de billes tant que le roulement fonctionne dans le mode de fonctionnement nominal. Ainsi dans ce mode de fonctionnement nominal, le premier jeu fonctionnel prédéterminé garantit l'absence de contact entre la première piste de roulement émettrice secondaire et les billes de la première rangée, et même le cas échéant en prenant compte des déformations sous charge du roulement.

De plus, un tel premier jeu fonctionnel prédéterminé permet aux billes de la seconde rangée se dégradant d'être sollicitées suffisamment longtemps par des efforts axiaux pour continuer sa dégradation et permettre une détection de cette dégradation avec un système de surveillance comportant par exemple un détecteur de particules métalliques ou de limailles en suspension dans un fluide de lubrification.

Une telle piste supplémentaire formée par la première piste de roulement émettrice secondaire est ainsi activée qu'après un niveau de dégradation avancé d'une piste de roulement au contact des billes de la seconde rangée.

En revanche dans le mode de fonctionnement dégradé du roulement et lorsque la bague émettrice est sollicitée par le au moins un second effort axial orienté selon le second axe, la première piste de roulement émettrice secondaire vient au contact de la pluralité de billes de la première rangée de billes et permet ainsi la transmission d'un second effort axial selon le second axe.

De même, de part et d'autre d'un second plan transversal passant par des centres des billes de la seconde rangée de billes, la au moins une bague émettrice comporte une seconde piste de roulement émettrice principale au contact avec la pluralité de billes de la seconde rangée de billes dans le mode de fonctionnement nominal et une seconde piste de roulement émettrice secondaire, la seconde piste de roulement émettrice secondaire étant distante selon un second jeu fonctionnel prédéterminé non nul de la seconde rangée de billes dans le mode de fonctionnement nominal, la seconde piste de roulement émettrice secondaire étant au contact avec la pluralité de billes de la seconde rangée de billes dans le mode de fonctionnement dégradé lorsque la au moins une bague émettrice est sollicitée par le au moins un premier effort axial orienté selon le premier axe.

Un tel second jeu fonctionnel prédéterminé permet quant à lui d'éviter la transmission d'un premier effort axial selon le premier axe dans la seconde rangée de billes tant que le roulement fonctionne dans le mode de fonctionnement nominal.

Cependant dans le mode de fonctionnement dégradé du roulement et lorsque la bague émettrice est sollicitée par le au moins un premier effort axial orienté selon le premier axe, la seconde piste de roulement émettrice secondaire peut se déplacer suivant le premier axe et venir au contact de la pluralité de billes de la seconde rangée de billes. Dans ce cas, la seconde piste de roulement émettrice secondaire permet la transmission d'un premier effort axial selon le premier axe vers une seconde piste de roulement réceptrice secondaire de la au moins une bague réceptrice.

Par suite, chacune des deux rangées de billes peut transmettre des efforts axiaux selon les premier et second axes opposés au moyen des pistes de roulement émettrice et réceptrice secondaires si une dégradation survient au niveau des pistes de roulement émettrice et/ou réceptrice principales coopérant initialement dans le mode de fonctionnement nominal avec l'autre rangée de billes.

En outre, le premier jeu fonctionnel prédéterminé est égal au second jeu fonctionnel prédéterminé.

Par suite, la première piste de roulement émettrice secondaire et la seconde piste de roulement émettrice secondaire sont agencées symétriquement par rapport à un plan médian de symétrie du roulement.

De plus, le premier jeu fonctionnel prédéterminé et le second jeu fonctionnel prédéterminé sont compris entre 0,1 mm (millimètre) et 0,5 mm (millimètre).

En effet, un tel premier jeu fonctionnel prédéterminé permet ainsi de basculer dans le mode de fonctionnement dégradé qu'à compter d'un niveau d'usure ou de dégradation prédéterminé d'au moins une seconde piste de roulement principale de la au moins une bague émettrice ou de la au moins une bague réceptrice initialement au contact dans le mode de fonctionnement nominal avec l'autre pluralité de billes de la seconde rangée de billes.

Il en résulte que non seulement le roulement reste actif mais qu'il est possible de détecter l'usure avant dysfonctionnement du roulement, par analyse vibratoires ou captation de limailles par exemple.

Un tel second jeu fonctionnel prédéterminé permet de basculer dans le mode de fonctionnement dégradé qu'à compter d'un niveau d'usure ou de dégradation prédéterminé d'au moins une première piste de roulement principale de la au moins une bague émettrice ou de la au moins un bague réceptrice initialement au contact dans le mode de fonctionnement nominal avec la pluralité de billes de la première rangée de billes.

Il en résulte que non seulement le roulement reste actif mais qu'il est possible de détecter l'usure avant dysfonctionnement du roulement, par analyse vibratoires ou captation de limailles par exemple.

Avantageusement, la première piste de roulement émettrice secondaire et la seconde piste de roulement émettrice secondaire peuvent être agencées symétriquement par rapport à un plan médian de symétrie du roulement.

Selon un premier mode de réalisation de l'invention, la au moins une bague réceptrice peut être monolithique.

Autrement dit, une telle bague réceptrice est monobloc et peut présenter à la fois la première piste de roulement réceptrice principale et la première piste de roulement réceptrice secondaire.

Dans ce cas, la au moins une bague émettrice peut comporter une première bague émettrice munie de la première piste de roulement émettrice principale et une deuxième bague émettrice munie de la première piste de roulement émettrice secondaire.

La première bague émettrice et la deuxième bague émettrice peuvent ainsi venir au contact avec la pluralité de billes de la première rangée de billes dans le mode de fonctionnement dégradé.

Selon une première variante du premier mode de réalisation de l'invention, la au moins une bague émettrice comporte uniquement une première bague émettrice et une deuxième bague émettrice. Dans ce cas, la première bague émettrice vient au contact de la pluralité de billes de la première rangée de billes dans le mode de fonctionnement nominal et la deuxième bague émettrice peut venir au contact de la pluralité de billes de la première rangée de billes dans le mode de fonctionnement dégradé et avec l'autre pluralité de billes de la seconde rangée de billes dans le mode de fonctionnement nominal.

Selon une seconde variante du premier mode de réalisation de l'invention, la au moins une bague émettrice comportant une seconde piste de roulement émettrice principale au contact avec la pluralité de billes de la seconde rangée de billes dans le mode de fonctionnement nominal, la au moins une bague émettrice peut comporter une première bague émettrice munie de la première piste de roulement émettrice principale, une deuxième bague émettrice munie de la première piste de roulement émettrice secondaire et une troisième bague émettrice munie de la seconde piste de roulement principale venant au contact dans le mode de fonctionnement nominal avec l'autre pluralité de billes de la seconde rangée de billes, la deuxième bague émettrice étant munie de la seconde piste de roulement émettrice secondaire.

Dans ce cas dans le mode de fonctionnement nominal, la troisième bague émettrice est au contact avec les billes de la seconde rangée de billes pour transmettre un second effort axial selon le second sens.

En revanche, dans le mode de fonctionnement dégradé, la troisième bague émettrice ne transmet plus d'effort axial à l'autre pluralité de billes de la seconde rangée de billes. La deuxième bague émettrice vient quant à elle en contact avec les billes de la première rangée de billes pour transmettre le second effort axial selon le second sens dans le mode de fonctionnement dégradé.

Selon un second mode de réalisation de l'invention, la au moins une bague émettrice peut être monolithique.

En d'autres termes, une telle bague émettrice est monobloc et peut présenter à la fois la première piste de roulement émettrice principale et la première piste de roulement émettrice secondaire.

Dans ce cas, la au moins une bague réceptrice peut comporter une première bague réceptrice munie de la première piste de roulement réceptrice secondaire et une deuxième bague réceptrice munie de la première piste de roulement réceptrice principale.

Selon une première variante du second mode de réalisation de l'invention, la au moins une bague émettrice étant monolithique, la au moins une bague réceptrice comporte uniquement une première bague réceptrice et une deuxième bague réceptrice. Dans ce cas, la première bague réceptrice peut venir au contact de la pluralité de billes de la première rangée de billes dans le mode de fonctionnement dégradé et la deuxième bague réceptrice est au contact de la pluralité de billes de la première rangée de billes et de l'autre pluralité de billes de la seconde rangée de billes dans le mode de fonctionnement nominal.

Selon une seconde variante du second mode de réalisation de l'invention, la au moins une bague émettrice étant monolithique, la au moins une bague réceptrice peut comporter une première bague réceptrice munie d'une première piste de roulement réceptrice secondaire, une deuxième bague réceptrice munie d'une première piste de roulement réceptrice principale et une troisième bague réceptrice munie d'une seconde piste de roulement réceptrice secondaire, la deuxième bague réceptrice étant munie d'une seconde piste de roulement réceptrice principale.

Dans ce cas dans le mode de fonctionnement nominal et dans le mode de fonctionnement dégradé, la troisième bague réceptrice peut être au contact avec l'autre pluralité de billes de la seconde rangée de billes mais ne transmet aucun effort axial selon le second axe.

Dans ce cas dans le mode de fonctionnement dégradé de la première rangée de billes, la troisième bague réceptrice peut être au contact avec l'autre pluralité de billes de la seconde rangée de billes mais ne transmet aucun effort axial selon le second axe

Dans le mode de fonctionnement nominal, la deuxième bague réceptrice est quant à elle au contact avec l'autre pluralité de billes de la seconde rangée de billes pour transmettre le second effort axial selon le second sens.

Dans le mode de fonctionnement dégradé, la première bague réceptrice vient au contact avec les billes de la première rangée de billes pour transmettre le second effort axial selon le second sens.

Par suite, l'invention concerne une boîte de transmission de puissance, notamment une boîte de transmission de puissance dite arrière ou auxiliaire d'un giravion permettant de transmettre un couple moteur à un rotor arrière pour contrer un couple transmis par la rotation d'un rotor principal à une cellule ou pour piloter les mouvements autour d'un axe de lacet du giravion.

L'invention se rapporte également à un aéronef comportant au moins un rotor muni de pales et au moins un moteur.

Selon l'invention, l'aéronef se caractérise en ce qu'il comporte une boîte de transmission de puissance telle que précitée, la boîte de transmission de puissance transmettant un couple moteur généré par le au moins un moteur audit au moins un rotor, la tige de commande de pas étant mécaniquement reliée à au moins un levier de pas des pales du au moins un rotor.

L'invention et ses avantages apparaîtront avec plus de détails dans le cadre de la description qui suit avec des exemples donnés à titre illustratif en référence aux figures annexées qui représentent :
- la figure 1, une vue en coupe transversale d'un premier exemple de roulement conforme à l'invention dans un mode de fonctionnement nominal,
- la figure 2, une vue en coupe transversale du premier exemple de roulement conforme à l'invention dans un mode de fonctionnement dégradé,
- la figure 3, une vue en coupe partielle du premier exemple de roulement conforme à l'invention,
- la figure 4, une vue en coupe transversale d'un second exemple de roulement conforme à l'invention dans un mode de fonctionnement nominal,
- la figure 5, une vue en coupe transversale d'une boîte de transmission de puissance conforme à l'invention,
- la figure 6, un schéma en coupe transversale d'un aéronef conforme à l'invention, et
- la figure 7, un logigramme représentatif d'un procédé de transmission d'au moins un effort axial conformément à l'invention.

Les éléments présents dans plusieurs figures distinctes sont affectés d'une seule et même référence.

Comme déjà évoqué l'invention se rapporte au domaine du guidage en rotation de pièces en mouvement, par exemple d'un aéronef permettant de le piloter dans les airs.

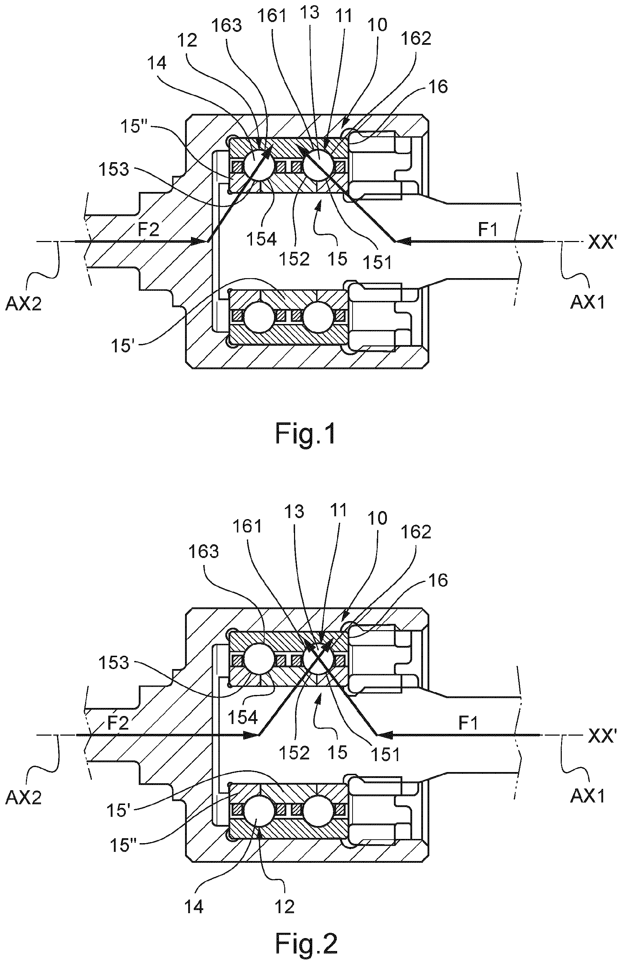

Tel que représenté à la figure 1, un tel guidage peut être réalisé au moyen d'un roulement 10 à billes à contact oblique comportant une première rangée 11 de billes munie d'une pluralité de billes 13 et une seconde rangée 12 de billes munie d'une autre pluralité de billes 14. De telles première et seconde rangées 11, 12 de billes sont alors agencées côte à côte de manière coaxiale selon un axe longitudinal du roulement 10 et sont interposées radialement selon ledit axe longitudinal entre au moins une bague émettrice 15, 15', 15" et au moins une bague réceptrice 16.

Selon le premier exemple de la figure 1, la au moins une bague émettrice 15, 15', 15" comporte une première bague émettrice 15, une deuxième bague émettrice 15' et une troisième bague émettrice 15". La au moins une bague réceptrice 16 est quant à elle formée par une bague réceptrice 16 monolithique.

En outre, la au moins une bague émettrice 15, 15', 15" est ici représentée par au moins une bague intérieure du roulement 10 mais peut également être représentée par au moins une bague extérieure d'un roulement. Le terme « émettrice » désigne en effet la faculté d'une bague du roulement à émettre un effort axial dans au moins une rangée 11, 12 de billes 13, 14 du roulement 10.

De même, la au moins une bague réceptrice 16 est ici représentée par au moins une bague extérieure du roulement 10 mais peut également être représentée par au moins une bague intérieure d'un roulement. Le terme « réceptrice » désigne quant à lui la faculté d'une bague du roulement à recevoir un effort axial au travers d'au moins une rangée 11, 12 de billes 13, 14 du roulement 10.

Telles que représentées, les première et seconde rangées 11, 12 de billes présentent des centres de poussée agencés vers l'extérieur du roulement 10 et forment ainsi un montage dit « en O ». En outre, un tel roulement pourrait également présenter des centres de poussée agencés vers l'intérieur du roulement et former un montage dit « en X ».

Les billes 13, 14, la au moins une bague émettrice 15, 15', 15" et la au moins une bague réceptrice 16 peuvent être généralement formées dans un matériau à faible coefficient de friction tel que de l'acier ou de la céramique de manière à conférer une longue durée de vie au roulement 10.

En outre, dans un mode de fonctionnement nominal du roulement 10 représenté à la figure 1, la première rangée 11 de billes permet de transmettre au moins un premier effort axial F1 orienté selon un premier axe AX1 depuis la première bague émettrice 15 vers la bague réceptrice 16 dans le cas d'un montage en O du roulement 10. Un tel premier axe AX1 est agencé coaxialement avec un axe de rotation XX' du roulement à billes 10 et est orienté selon un premier sens d'une première face latérale 17 de la au moins une bague émettrice 15, 15', 15" vers une seconde face latérale 18 de la au moins une bague émettrice 15, 15', 15".

Alternativement dans le cas d'un montage en X du roulement 10, la seconde rangée 12 de billes permettrait de transmettre au moins un premier effort axial F1 orienté selon un premier axe AX1 depuis la bague troisième bague émettrice 15" vers la bague réceptrice 16.

Toujours dans ce mode de fonctionnement nominal du roulement 10, la seconde rangée 12 de billes permet quant à elle de transmettre au moins un second effort axial F2 orienté selon un second axe AX2, opposé au premier axe AX1, depuis la troisième bague intérieure 15" vers la bague extérieure 16 dans le cas d'un montage en O du roulement 10.

Alternativement dans le cas d'un montage en X du roulement 10, la première rangée 11 de billes permettrait de transmettre au moins un second effort axial F2 orienté selon un second axe AX2 depuis la deuxième bague émettrice 15' vers la bague réceptrice 16.

Telle que représentée dans le cas d'un montage en O, la première bague émettrice 15 comporte une première piste de roulement émettrice principale 151 au contact avec les billes 13 de la première rangée 11 de billes.

La bague réceptrice 16 comporte quant à elle une première piste de roulement réceptrice principale 161 au contact avec les billes 13 de la première rangée 11 de billes.

Les billes 13 de la première rangée 11 de billes permettent alors de transmettre le ou les premiers efforts axiaux F1 depuis la première piste de roulement émettrice principale 151 vers la première piste de roulement réceptrice principale 161

Dans ce mode de fonctionnement nominal du roulement 10, la troisième bague réceptrice 15" comporte une seconde piste de roulement émettrice principale 153 venant au contact avec l'autre pluralité de billes 14 de la seconde rangée 12 de billes.

La bague réceptrice 16 comporte quant à elle une seconde piste de roulement réceptrice principale 163 venant au contact initialement avec l'autre pluralité de billes 14 de la seconde rangée 12 de billes.

Les billes 14 de la seconde rangée 12 de billes permettent alors initialement de transmettre le ou les seconds efforts axiaux F2 depuis la seconde piste de roulement émettrice principale 153 vers la seconde piste de roulement réceptrice principale 163.

Dans un mode dégradé du roulement 10 représenté à la figure 2, ces pistes de roulement 153, 163 peuvent se dégrader, s'user et provoquer un mauvais guidage en rotation des pièces en mouvement et du jeu dans la commande en translation.

Un tel roulement 10 est alors remarquable en ce que la première rangée 11 de billes est configurée pour transmettre d'une part le ou les premiers efforts axiaux F1 orientés selon le premier axe AX1 et d'autre part le ou les seconds efforts axiaux F2 orientés selon le second axe AX2 dans le mode de fonctionnement dégradé. Dans un tel mode de fonctionnement dégradé du roulement 10, la seconde rangée 12 de billes ne transmet plus ou peu d'effort axial entre la troisième bague émettrice 15" et la bague réceptrice 16.

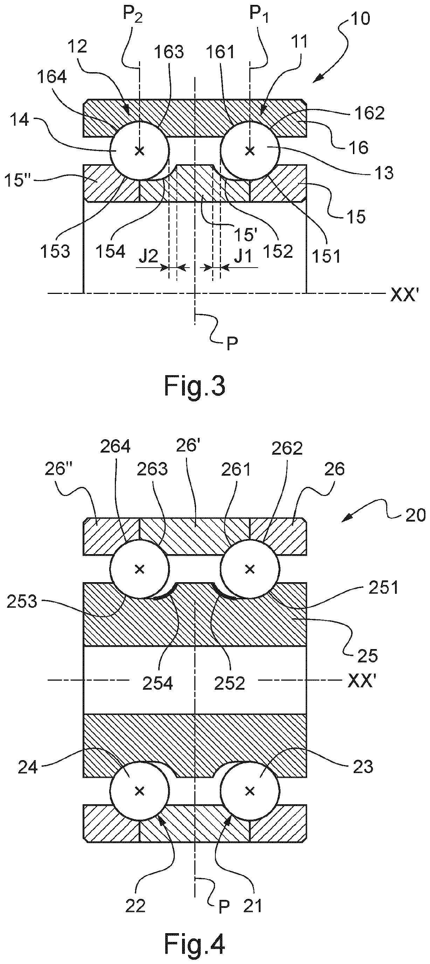

Tel que représenté à la figure 3, un tel fonctionnement de la première rangée 11 de billes peut être obtenu grâce à la présence sur la seconde bague émettrice 15' d'une première piste de roulement émettrice secondaire 152. Cette première piste de roulement émettrice secondaire 152 est distante selon un premier jeu fonctionnel J1 prédéterminé non nul des billes 13 de la première rangée 11 de billes dans le mode de fonctionnement nominal. En outre, la première piste de roulement émettrice principale 151 et la première piste de roulement émettrice secondaire 152 sont ainsi agencées de part et d'autre d'un premier plan transversal P1 passant par les centres des billes 13 de la première rangée 11 de billes.

En revanche dans le mode de fonctionnement dégradé et sous une sollicitation de la bague seconde bague émettrice 15' par le ou les seconds efforts axiaux F2 orientés selon le second axe AX2, la première piste de roulement émettrice secondaire 152 vient au contact des billes 13 de la première rangée 11 de billes pour transmettre le ou les seconds efforts axiaux F2 orientés selon le second axe AX2 aux billes 13 puis à la bague réceptrice 16 via une première piste de roulement réceptrice secondaire 162. La première piste de roulement réceptrice principale 161 et la première piste de roulement réceptrice secondaire 162 sont également agencées de part et d'autre du premier plan transversal P1 passant par les centres des billes 13 de la première rangée 11 de billes.

En outre de manière complémentaire, le roulement 10 peut comporter une configuration similaire au niveau de la seconde rangée 12 de billes. Cette configuration de la seconde rangée 12 de billes peut ainsi être obtenue grâce à la présence sur la deuxième bague émettrice 15' d'une seconde piste de roulement émettrice secondaire 154. Cette seconde piste de roulement émettrice secondaire 154 est distante selon un second jeu fonctionnel J2 prédéterminé non nul des billes 14 de la seconde rangée 12 de billes dans ledit mode de fonctionnement nominal.

En outre, la seconde piste de roulement émettrice principale 153 et la seconde piste de roulement émettrice secondaire 154 sont ainsi agencées de part et d'autre d'un second plan transversal P2 passant par les centres des billes 14 de la seconde rangée 12 de billes.

De même, la première piste de roulement émettrice secondaire 152 et la seconde piste de roulement émettrice secondaire 154 peuvent être agencées symétriquement par rapport à un plan médian de symétrie P du roulement 10.

En revanche dans un autre mode de fonctionnement dégradé similaire au mode de fonctionnement dégradé et sous une sollicitation de la bague seconde bague émettrice 15' par le ou les premiers efforts axiaux F1 orientés selon le premier axe AX1, la seconde piste de roulement émettrice secondaire 154 vient au contact avec les billes 14 de la seconde rangée 12 de billes pour transmettre le ou les premiers efforts axiaux F1 orientés selon le premier axe AX1 aux billes 14 puis à la bague réceptrice 16 via une seconde piste de roulement réceptrice secondaire 164. La seconde piste de roulement réceptrice principale 163 et la seconde piste de roulement réceptrice secondaire 164 sont également agencées de part et d'autre du second plan transversal P2 passant par les centres des billes 14 de la seconde rangée 12 de billes.

Le premier jeu fonctionnel J1 prédéterminé et le second jeu fonctionnel J2 prédéterminé peuvent être égaux et compris entre 0,01 mm (millimètre) et 1 mm (millimètre).

En outre, ces premier et second jeux de fonctionnement du roulement 10 peuvent être préférentiellement compris entre 0,1 mm (millimètre) et 0,5 mm (millimètre) et peuvent par exemple être de l'ordre de 0,3 mm (millimètre).

Par suite dans le mode fonctionnement dégradé du roulement 10, chacune des première et seconde rangées 11, 12 de billes peut être utilisée pour transmettre des efforts axiaux selon les deux axes opposés AX1 et AX2 si une dégradation apparait au niveau des piste de roulement agencées en regard avec l'autre rangée de billes.

Selon un second exemple de roulement 20 à billes représenté à la figure 4 dont le fonctionnement est similaire à celui du premier exemple de roulement 10, la au moins une bague émettrice 25 peut être monolithique et le roulement 20 à billes être à contact oblique du type en O.

Dans cet exemple, la au moins une bague réceptrice 26, 26', 26" comporte une première bague réceptrice 26, une deuxième bague réceptrice 26' et une troisième bague réceptrice 26".

La bague émettrice 25 comporte une piste de roulement émettrice principale 251 au contact de la pluralité de billes 13 de la première rangée 11 de billes dans le mode de fonctionnement nominal.

La deuxième bague réceptrice 26' comporte quant à elle une piste de roulement réceptrice principale 261 au contact avec la pluralité de billes 13 de la première rangée 11 de billes dans le mode de fonctionnement nominal.

Les billes 13 de la première rangée 11 de billes permettent alors de transmettre le ou les premiers efforts axiaux F1 depuis la première piste de roulement émettrice principale 251 vers la première piste de roulement réceptrice principale 261.

Dans le mode de fonctionnement nominal, la bague émettrice 25 comporte une seconde piste de roulement émettrice principale 253 venant au contact avec l'autre pluralité de billes 14 de la seconde rangée 12 de billes.

La deuxième bague réceptrice 26' comporte quant à elle une autre piste de roulement 263 venant au contact avec l'autre pluralité de billes 14 de la seconde rangée 12 de billes dans le mode de fonctionnement nominal.

Dans le mode de fonctionnement nominal du roulement 20, les billes 14 de la seconde rangée 12 de billes permettent alors de transmettre le ou les seconds efforts axiaux F2 depuis la seconde piste de roulement émettrice principale 253 vers la seconde piste de roulement réceptrice principale 263.

Dans le mode dégradé du roulement 20 selon lequel l'une au moins des secondes pistes émettrice 253 et/ou réceptrice 263 est usée, la seconde rangée 12 de billes ne transmet plus d'effort axial entre la bague émettrice 25 et la deuxième bague réceptrice 26'.

Cependant, la bague émettrice 25 présente une première piste de roulement émettrice secondaire 252 et la première bague réceptrice 26 présente une première piste de roulement réceptrice secondaire 262. Dans le mode de fonctionnement dégradé et sous une sollicitation de la bague émettrice 25 par le ou les seconds efforts axiaux F2 orientés selon le second axe AX2, la première piste de roulement émettrice secondaire 252 vient au contact des billes 13 de la première rangée 11 de billes. Les billes 13 de la première rangée 11 de billes viennent alors au contact de la première piste de roulement réceptrice secondaire 262 pour permettre au roulement 20 de transmettre le ou les seconds efforts axiaux F2.

De même, dans l'autre mode dégradé du roulement 20 selon lequel l'une au moins des premières pistes émettrice 251 et/ou réceptrice 261 est usée, la première rangée 12 de billes ne transmet plus d'effort axial entre la bague émettrice 25 et la deuxième bague réceptrice 26'.

Cependant, la bague émettrice 25 présente une seconde piste de roulement émettrice secondaire 254 et la troisième bague réceptrice 26" présente une seconde piste de roulement réceptrice secondaire 264. Dans le mode de fonctionnement dégradé et sous une sollicitation de la bague émettrice 25 par le ou les premiers efforts axiaux F1 orientés selon le premier axe AX1, la seconde piste de roulement émettrice secondaire 254 vient au contact des billes 14 de la seconde rangée 12 de billes. Les billes 14 de la seconde rangée 12 de billes viennent alors au contact de la seconde piste de roulement réceptrice secondaire 264 pour permettre au roulement 20 de transmettre le ou les premiers efforts axiaux F1.

Selon d'autres exemples non représentés, la au moins une bague émettrice peut également comporter quatre bagues émettrices et/ou la au moins une bague réceptrice peut comporter deux bagues réceptrices et inversement.

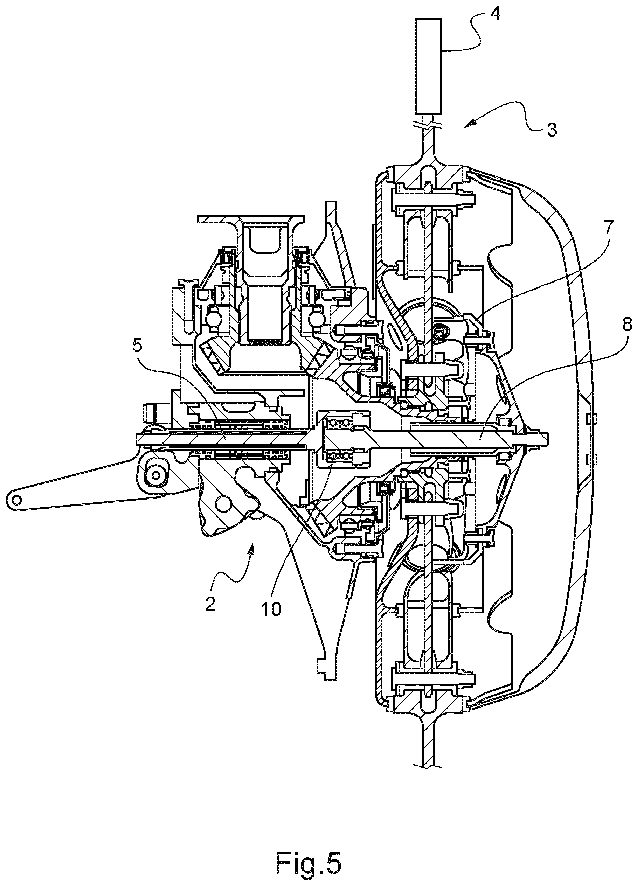

Telle que représentée à la figure 5, l'invention concerne également une boîte de transmission de puissance 2 configurée pour transmettre un couple moteur à au moins un rotor 3 muni de pales 4.

Une telle boîte de transmission de puissance 2 comporte ainsi une tige de commande de pas 5 solidaire en translation par exemple avec la bague réceptrice 16 d'un roulement 10 à billes conforme à la figure 1.

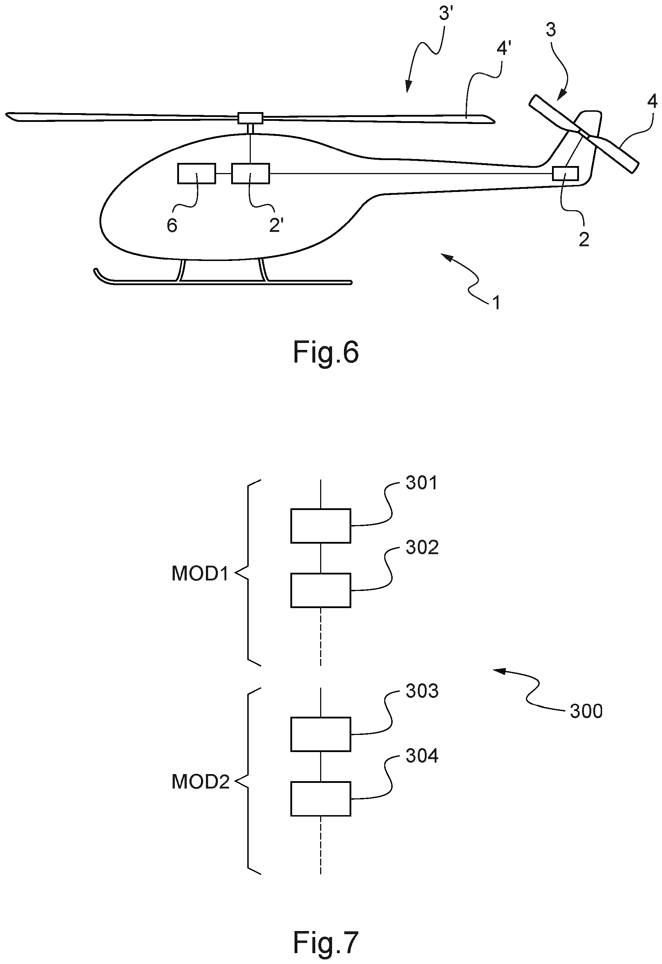

Telle que représentée à la figure 6, une telle boîte de transmission de puissance 2 permet de transmettre un couple moteur généré par au moins un moteur 6 au rotor 3 et la tige de commande de pas 5 est mécaniquement reliée à au moins un levier de pas 7 des pales 4 du rotor 3. La tige de commande de pas 5 permet ainsi de transmettre au moins un effort axial F1, F2 à un ou plusieurs leviers de pas 7. Chaque levier de pas 7 est articulés et solidaires, au niveau d'une première extrémité, avec une pale 4 et, au niveau d'une seconde extrémité, avec un arbre de commande de pas 8 solidaire de la au moins une bague émettrice 15, 15', 15".

Ces différents leviers de pas 7 peuvent alors permettre de modifier collectivement le pas de ces pales 4 via un arbre de commande de pas solidaire de la au moins une bague émettrice 15, 15', 15".

En outre, un aéronef 1 comporte au moins un rotor 3, 3' muni de pales 4, 4' et du ou des moteurs 6. Tel que représenté sur la figure 6, le rotor 3 peut être un rotor arrière d'un giravion permettant notamment un pilotage des mouvements de lacet de l'aéronef et le rotor 3' est un rotor principal de ce giravion participant au moins à sa sustentation dans les airs.

L'aéronef 1 comporte aussi une boîte de transmission de puissance auxiliaire 2 et une boîte de transmission principale 2'.

Un couple moteur généré par le moteur 6 peut alors être transmis aux rotors 3, 3' et au moins un effort axial F1, F2 peut être transmis de la tige de commande de pas 5 vers au moins un levier de pas 7.

Telle que représentée à la figure 7, l'invention concerne également un procédé 300 de transmission d'au moins un effort axial F1, F2 au moyen d'un roulement 10, 20 à billes à contact oblique tel que précédemment décrit.

Un tel procédé 300 comporte ainsi au moins un mode de fonctionnement nominal MOD1 du roulement 10, 20 à billes.

Dans ce mode fonctionnement nominal MOD1, le procédé 300 comporte au moins une transmission 301 d'au moins un premier effort axial F1 au travers de la première rangée 11, 21 de billes, ce ou ces premiers efforts axiaux F1 étant orientés selon le premier axe AX1 depuis la au moins une bague émettrice 15, 15', 15", 25 vers la au moins une bague réceptrice 16, 26, 26', 26".

Puis, dans une autre phase temporelle du mode fonctionnement nominal MOD1, le procédé 300 comporte au moins une transmission opposée 302 d'au moins un second effort axial F2 au travers de la seconde rangée 12, 22 de billes, ce ou ces seconds efforts axiaux F2 étant orientés selon le second axe AX2, opposé au premier axe AX1, depuis la au moins une bague émettrice 15, 15', 15", 25 vers la au moins une bague réceptrice 16, 26, 26', 26".

La transmission 301 et la transmission opposée 302 sont ainsi mises en oeuvre plusieurs fois l'une après l'autre de manière alternative dans le mode de fonctionnement nominal MOD1.

En revanche dans un mode de fonctionnement dégradé MOD2 du roulement 10, 20, le procédé 300 comporte au moins une transmission 303 du ou des premiers efforts axiaux F1 au travers de la première rangée 11, 21 de billes orientés selon le premier axe AX1.

Puis, dans une autre phase temporelle du mode de fonctionnement dégradé MOD2, le procédé 300 comporte au moins une transmission opposée 304 du ou des seconds efforts axiaux F2 au travers de la première rangée 11, 21 de billes orientés selon le second axe AX2.

La transmission 303 et la transmission opposée 304 peuvent ainsi être mises en oeuvre plusieurs fois l'une après l'autre de manière alternative dans le mode de fonctionnement dégradé MOD2.

En outre, un tel mode de fonctionnement dégradé MOD2 correspond à une dégradation d'au moins une seconde piste de roulement émettrice principale 153, 253 de la au moins une bague émettrice 15, 15', 15", 25 ou de la au moins une bague réceptrice 16, 26, 26', 26" venant au contact avec les billes 14, 24 de la seconde rangée 12, 22 de billes.

Naturellement, la présente invention est sujette à de nombreuses variations dans le cadre des revendications annexées.

## Revendications

1. Boîte de transmission de puissance (2, 2') configurée pour transmettre un couple moteur à au moins un rotor (3, 3') muni de pales (4, 4'), ladite boîte de transmission de puissance (2, 2') comportant :
• un roulement (10, 20) à billes à contact oblique comportant une première rangée (11, 21) de billes munie d'une pluralité de billes (13, 23), une seconde rangée (12, 22) de billes munie d'une autre pluralité de billes (14, 24), et
• une tige de commande de pas (5) solidaire en translation avec au moins une bague réceptrice (16, 26, 26', 26") dudit roulement (10, 20) à billes,
et, dans un mode de fonctionnement nominal dudit roulement (10, 20) :
• ladite première rangée (11, 21) de billes transmet au moins un premier effort axial (F1) orienté selon un premier axe (AX1) depuis au moins une bague émettrice (15, 15', 15", 25) vers au moins une bague réceptrice (16, 26, 26', 26") dudit roulement (10, 20) à billes, et
• ladite seconde rangée (12, 22) de billes transmet au moins un second effort axial (F2) orienté selon un second axe (AX2), opposé audit premier axe (AX1), depuis ladite au moins une bague émettrice (15, 15', 15", 25) vers ladite au moins une bague réceptrice (16, 26, 26', 26"),
**caractérisé en ce que**, dans
un mode de fonctionnement dégradé dudit roulement (10, 20) ladite première rangée (11, 21) de billes est configurée pour transmettre d'une part ledit au moins un premier effort axial (F1) orienté selon ledit premier axe (AX1) et d'autre part ledit au moins un second effort axial (F2) orienté selon ledit second axe (AX2), ladite seconde rangée (12, 22) de billes transmettant aucun effort axial, ledit mode de fonctionnement dégradé correspondant à une dégradation d'au moins une piste de roulement (153, 253, 163, 263) de ladite au moins une bague émettrice (15, 15', 15", 25) ou de ladite au moins une bague réceptrice (16, 26, 26', 26") venant initialement au contact de ladite autre pluralité de billes (14, 24) de ladite seconde rangée (12, 22) de billes dans ledit mode de fonctionnement nominal,
et **en ce que**, de part et d'autre d'un premier plan transversal passant par des centres desdites billes (13, 23) de ladite première rangée (11, 21) de billes, ladite au moins une bague émettrice (15, 15', 15", 25) comporte une première piste de roulement émettrice principale (151, 251) au contact avec ladite pluralité de billes (13, 23) de ladite première rangée (11, 21) de billes dans le mode de fonctionnement nominal et une première piste de roulement émettrice secondaire (152, 252), ladite première piste de roulement émettrice secondaire (152, 252) étant distante selon un premier jeu fonctionnel (J1) prédéterminé non nul de ladite première rangée (11, 21) de billes dans ledit mode de fonctionnement nominal, ladite première piste de roulement émettrice secondaire (152, 252) étant au contact avec ladite pluralité de billes (13, 23) de ladite première rangée (11, 21) de billes dans ledit mode de fonctionnement dégradé lorsque la au moins une bague émettrice (15, 15', 15", 25) est sollicitée par le au moins un second effort axial (F2) orienté selon le second axe (AX2),
et **en ce que**, de part et d'autre d'un second plan transversal passant par des centres desdites billes (14, 24) de ladite seconde rangée (12, 22) de billes, ladite au moins une bague émettrice (15, 25, 25', 25") comporte une seconde piste de roulement émettrice principale (153, 253) au contact avec ladite pluralité de billes (14, 24) de ladite seconde rangée (12, 22) de billes dans le mode de fonctionnement nominal et une seconde piste de roulement émettrice secondaire (154, 254), ladite seconde piste de roulement émettrice secondaire (154, 254) étant distante selon un second jeu fonctionnel (J2) prédéterminé non nul de ladite seconde rangée (12, 22) de billes dans ledit mode de fonctionnement nominal, ladite seconde piste de roulement émettrice secondaire (154, 254) étant au contact avec ladite pluralité de billes (14, 24) de ladite seconde rangée (12, 22) de billes dans ledit mode de fonctionnement dégradé lorsque la au moins une bague émettrice est sollicitée par le au moins un premier effort axial (F1) orienté selon le premier axe (AX1), ledit premier jeu fonctionnel (J1) prédéterminé étant égal audit second jeu fonctionnel (J2) prédéterminé et compris entre 0,1 mm (millimètre) et 0,5 mm (millimètre).

2. Boîte de transmission de puissance selon la revendication 1, **caractérisée en ce que** la première piste de roulement émettrice secondaire (152, 252) et la seconde piste de roulement émettrice secondaire (154, 254) sont agencées symétriquement par rapport à un plan médian (P) de symétrie dudit roulement (10, 20).

3. Boîte de transmission de puissance selon l'une quelconque des revendications 1 à 2,
**caractérisée en ce que** ladite au moins une bague émettrice (15, 15', 15") comporte une première bague émettrice (15) munie de ladite première piste de roulement émettrice principale (151) et une deuxième bague émettrice (15') munie de ladite première piste de roulement émettrice secondaire (152).

4. Boîte de transmission de puissance selon la revendication 3, **caractérisé en ce que**, ladite au moins une bague émettrice (15, 15', 15") comportant une seconde piste de roulement émettrice principale (153) au contact avec ladite pluralité de billes (14) de ladite seconde rangée (12) de billes dans le mode de fonctionnement nominal, ladite au moins une bague émettrice (15, 15', 15") comporte une troisième bague émettrice (15") munie de ladite seconde piste de roulement principale (153) venant au contact dans ledit mode de fonctionnement nominal avec ladite autre pluralité de billes (14) de ladite seconde rangée (12) de billes ladite deuxième bague émettrice (15') étant munie de ladite seconde piste de roulement émettrice secondaire (154).

5. Boîte de transmission de puissance selon l'une quelconque des revendications 1 à 4,
**caractérisé en ce que** ladite au moins une bague réceptrice (16) est monolithique.

6. Boîte de transmission de puissance selon l'une quelconque des revendications 1 à 2,
**caractérisé en ce que** ladite au moins une bague émettrice (25) est monolithique.

7. Boîte de transmission de puissance selon l'une quelconque des revendications 1 à 2,
**caractérisé en ce que**, ladite au moins une bague émettrice (25) étant monolithique, ladite au moins une bague réceptrice (26, 26', 26") comporte une première bague réceptrice (26) munie d'une première piste de roulement réceptrice secondaire (262) et une deuxième bague réceptrice (26') munie d'une première piste de roulement réceptrice principale (261).

8. Boîte de transmission de puissance selon la revendication 7, **caractérisé en ce que** ladite au moins une bague réceptrice (26, 26', 26") comporte une troisième bague réceptrice (26") munie d'une seconde piste de roulement réceptrice secondaire (264), ladite deuxième bague réceptrice (26') étant munie d'une seconde piste de roulement réceptrice principale (263).

9. Aéronef (1) comportant au moins un rotor (3, 3') muni de pales (4, 4') et au moins un moteur (6),
**caractérisé en ce que** ledit aéronef (1) comporte une boîte de transmission de puissance (2, 2') selon l'une quelconque des revendications 1 à 8, ladite boîte de transmission de puissance (2, 2') transmettant un couple moteur généré par ledit au moins un moteur (6) audit au moins un rotor (3, 3'), ladite tige de commande de pas (5) étant mécaniquement reliée à au moins un levier de pas (7) desdites pales (4) dudit au moins un rotor (3).

## Patentansprüche

1. Kraftübertragungsgetriebe (2, 2'), das zur Übertragung eines Antriebsdrehmoments auf mindestens einen mit Blättern (4, 4') versehenen Rotor (3, 3') konfiguriert ist, wobei das Kraftübertragungsgetriebe (2, 2') umfasst:
• ein Schrägkugellager (10, 20) das eine erste Kugelreihe (11, 21) mit einer Mehrzahl von Kugeln (13, 23) und eine zweite Kugelreihe (12, 22) mit einer weiteren Mehrzahl von Kugeln (14, 24) aufweist, und
• eine Anstellwinkelsteuerstange (5), die translatorisch fest mit mindestens einem Aufnahmering (16, 26, 26', 26") des Kugellagers (10, 20) verbunden ist,
wobei in einem nominalen Betriebsmodus des Kugellagers (10, 20):
• die erste Kugelreihe (11, 21) mindestens eine entlang einer ersten Achse (AX1) ausgerichtete erste Axialkraft (F1) von mindestens einem Sendering (15, 15', 15", 25) an mindestens einen Aufnahmering (16, 26, 26', 26") des Kugellagers (10, 20) überträgt, und
• die zweite Kugelreihe (12, 22) mindestens eine entlang einer zur ersten Achse (AX1) entgegengesetzten zweiten Achse (AX2) ausgerichtete zweite Axialkraft (F2) von dem mindestens einen Sendering (15, 15', 15", 25) auf den mindestens einen Aufnahmering (16, 26, 26', 26") überträgt,
**dadurch gekennzeichnet, dass** in einem verschlechterten Betriebsmodus des Lagers (10, 20) die erste Kugelreihe (11, 21) konfiguriert ist, um einerseits die mindestens eine entlang der ersten Achse (AX1) ausgerichtete erste Axialkraft (F1) und andererseits die mindestens eine entlang der zweiten Achse (AX2) ausgerichtete zweite Axialkraft (F2) zu übertragen, während die zweite Kugelreihe (12, 22) keine Axialkraft überträgt, wobei der verschlechterte Betriebsmodus einer Verschlechterung mindestens einer Laufbahn (153, 253, 163, 263) des mindestens einen Senderings (15, 15', 15", 25) oder des mindestens einen Aufnahmerings (16, 26, 26', 26") entspricht, die in dem nominalen Betriebsmodus ursprünglich mit der anderen Mehrzahl von Kugeln (14, 24) der zweiten Kugelreihe (12, 22) in Kontakt kommt,
und dass auf beiden Seiten einer ersten Querebene, die durch Mittelpunkte der Kugeln (13, 23) der ersten Kugelreihe (11, 21) verläuft, der mindestens eine Sendering (15, 15', 15", 25) eine erste Hauptsendelaufbahn (151, 251), die im nominalen Betriebsmodus mit der Mehrzahl von Kugeln (13, 23) der ersten Kugelreihe (11, 21) in Kontakt steht, und eine erste Nebensendelaufbahn (152, 252) aufweist, wobei im nominalen Betriebsmodus die erste Nebensendelaufbahn (152, 252) von der ersten Kugelreihe (11, 21) um ein erstes vorgegebenes Funktionsspiel (J1) ungleich Null beabstandet ist, dass die erste Nebensendelaufbahn (152, 252) in dem verschlechterten Betriebsmodus mit der Mehrzahl von Kugeln (13, 23) der ersten Kugelreihe (11, 21) in Kontakt steht, wenn der mindestens eine Sendering (15, 15', 15", 25) durch die mindestens eine entlang der zweiten Achse (AX2) ausgerichtete zweite Axialkraft (F2) beansprucht wird,
und dass auf beiden Seiten einer zweiten Querebene, die durch Mittelpunkte der Kugeln (14, 24) der zweiten Kugelreihe (12, 22) verläuft, der mindestens eine Sendering (15, 25, 25', 25") eine zweite Hauptsendelaufbahn (153, 253), die im nominalen Betriebsmodus mit der Mehrzahl von Kugeln (14, 24) der zweiten Kugelreihe (12, 22) von Kugeln in Kontakt steht, und eine zweite Nebensendelaufbahn (154, 254) aufweist, wobei im nominalen Betriebsmodus die zweite Nebensendelaufbahn (154, 254) von der zweiten Kugelreihe (12, 22) um ein zweites vorgegebenes Funktionsspiel (J2) ungleich Null beabstandet ist, wobei die zweite Nebensendelaufbahn (154, 254) in dem verschlechterten Betriebsmodus in Kontakt mit der Mehrzahl von Kugeln (14, 24) der zweiten Kugelreihe (12, 22) steht, wenn der mindestens eine Sendelaufring durch die mindestens eine entlang der ersten Achse (AX1) ausgerichtete erste Axialkraft (F1) beansprucht wird, wobei das erste vorgegebene Funktionsspiel (J1) gleich dem zweiten vorgegebenen Funktionsspiel (J2) ist und zwischen 0,1 mm (Millimeter) und 0,5 mm (Millimeter) liegt.

2. Kraftübertragungsgetriebe nach Anspruch 1,
**dadurch gekennzeichnet, dass** die erste Nebensendelaufbahn (152, 252) und die zweite Nebensendelaufbahn (154, 254) in Bezug auf eine Symmetrie-Mittelebene (P) des Lagers (10, 20) symmetrisch angeordnet sind.

3. Kraftübertragungsgetriebe nach einem der Ansprüche 1 bis 2,
**dadurch gekennzeichnet, dass** der mindestens eine Sendering (15, 15', 15") einen ersten Sendering (15), der mit der ersten Hauptsendelaufbahn (151) versehen ist, und einen zweiten Sendering (15'), der mit der ersten Nebensendelaufbahn (152) versehen ist, umfasst.

4. Kraftübertragungsgetriebe nach Anspruch 3,
**dadurch gekennzeichnet, dass** der mindestens eine Sendering (15, 15', 15") eine zweite Hauptsendelaufbahn (153) aufweist, die im nominalen Betriebsmodus mit der Mehrzahl von Kugeln (14) der zweiten Kugelreihe (12) in Kontakt steht, dass der mindestens eine Sendering (15, 15', 15") einen dritten Sendering (15") aufweist, der mit der zweiten Hauptlaufbahn (153) versehen ist, die in dem nominalen Betriebsmodus mit der anderen Mehrzahl von Kugeln (14) der zweiten Kugelreihe (12) in Kontakt steht, und dass der zweite Sendering (15') die zweite Nebensendelaufbahn (154) aufweist.

5. Kraftübertragungsgetriebe nach einem der Ansprüche 1 bis 4,
**dadurch gekennzeichnet, dass** der mindestens eine Aufnahmering (16) monolithisch ist.

6. Kraftübertragungsgetriebe nach einem der Ansprüche 1 bis 2,
**dadurch gekennzeichnet, dass** der mindestens eine Sendering (25) monolithisch ist.

7. Kraftübertragungsgetriebe nach einem der Ansprüche 1 bis 2,
**dadurch gekennzeichnet, dass** der mindestens eine Sendering (25) monolithisch ist und der mindestens eine Aufnahmering (26, 26', 26") einen ersten Aufnahmering (26) mit einer ersten Nebenaufnahmelaufbahn (262) und einen zweiten Aufnahmering (26') mit einer ersten Hauptaufnahmelaufbahn (261) aufweist.

8. Kraftübertragungsgetriebe nach Anspruch 7,
**dadurch gekennzeichnet, dass** der mindestens eine Aufnahmering (26, 26', 26") einen dritten Aufnahmering (26") umfasst, der mit einer zweiten Nebenaufnahmelaufbahn (264) versehen ist, und der zweite Aufnahmering (26') mit einer zweiten Hauptaufnahmelaufbahn (263) versehen ist.

9. Luftfahrzeug (1) mit mindestens einem Rotor (3, 3'), der mit Blättern (4, 4') versehen ist, und mindestens einem Triebwerk (6),
**dadurch gekennzeichnet, dass** das Luftfahrzeug (1) ein Kraftübertragungsgetriebe (2, 2') nach einem der Ansprüche 1 bis 8 aufweist, wobei das Kraftübertragungsgetriebe (2, 2') ein von dem mindestens einen Motor (6) erzeugtes Antriebsmoment auf den mindestens einen Rotor (3, 3') überträgt, wobei die Anstellwinkelsteuerstange (5) mechanisch mit mindestens einem Anstellwinkelhebel (7) der Blätter (4) des mindestens einen Rotors (3) verbunden ist.

## Claims

1. Gearbox (2, 2') configured to transmit an engine torque to at least one rotor (3, 3') provided with blades (4, 4'),
said gearbox (2, 2') comprising
• an angular contact ball bearing (10, 20) comprising a first row (11, 21) of balls provided with a plurality of balls (13, 23), a second row (12, 22) of balls provided with another plurality of balls (14, 24), and
• a pitch control rod (5) integral in translation with at least one receiving ring (16, 26, 26', 26") of said angular contact ball bearing (10, 20),
and, in a nominal operating mode of said bearing (10, 20):
• said first row (11, 21) of balls transmits at least one first axial force (F1) oriented along a first axis (AX1) from at least one transmitting ring (15, 15', 15", 25) to the at least one receiving ring (16, 26, 26', 26") of said ball bearing (10, 20), and
• said second row (12, 22) of balls transmits at least one second axial force (F2) oriented along a second axis (AX2), opposite said first axis (AX1), from said at least one transmitting ring (15, 15', 15", 25) to said at least one receiving ring (16, 26, 26', 26"),
**characterized in that**, in a degraded operating mode of said bearing (10, 20), said first row (11, 21) of balls is configured to transmit both said at least one first axial force (F1) oriented along said first axis (AX1) and said at least one second axial force (F2) oriented along said second axis (AX2), said second row (12, 22) of balls transmitting no axial force, said degraded operating mode corresponding to a degradation of at least one raceway (153, 253, 163, 263) of said at least one transmitting ring (15, 15', 15", 25) or of said at least one receiving ring (16, 26, 26', 26") initially coming into contact with said other plurality of balls (14, 24) of said second row (12, 22) of balls in said nominal operating mode,
and **in that**, on either side of a first transverse plane passing through centres of said balls (13, 23) of said first row (11, 21) of balls, said at least one transmitting ring (15, 15', 15", 25) comprises a first main transmitting raceway (151, 251) in contact with said plurality of balls (13, 23) of said first row (11, 21) of balls in the nominal operating mode and a first secondary transmitting raceway (152, 252), said first secondary transmitting raceway (152, 252) being spaced by a first predetermined non-zero operating clearance (J1) from said first row (11, 21) of balls in said nominal operating mode, said first secondary transmitting raceway (152, 252) being in contact with said plurality of balls (13, 23) of said first row (11, 21) of balls in said degraded operating mode when said at least one transmitting ring (15, 15', 15", 25) is subjected to said at least one second axial force (F2) oriented along the second axis (AX2),
and **in that**, on either side of a second transverse plane passing through centres of said balls (14, 24) of said second row (12, 22) of balls, said at least one transmitting ring (15, 25, 25', 25") comprises a second main transmitting raceway (153, 253) in contact with said plurality of balls (14, 24) of said second row (12, 22) of balls in the nominal operating mode and a second secondary transmitting raceway (154, 254), said second secondary transmitting raceway (154, 254) being spaced by a second predetermined non-zero operating clearance (J2) from said second row (12, 22) of balls in said nominal operating mode, said second secondary transmitting raceway (154, 254) being in contact with said plurality of balls (14, 24) of said second row (12, 22) of balls in said degraded operating mode when said at least one transmitting ring is subjected to said at least one first axial force (F1) oriented along the first axis (AX1), said first predetermined operating clearance (J1) being equal to said second predetermined operating clearance (J2) and ranging from 0.1 mm (millimetre) to 0.5 mm (millimetre).

2. Gearbox according to Claim 1,
**characterized in that** the first secondary transmitting raceway (152, 252) and the second secondary transmitting raceway (154, 254) are arranged symmetrically with respect to a median plane (P) of symmetry of said bearing (10, 20).

3. Gearbox according to any one of Claims 1 to 2,
**characterized in that** said at least one transmitting ring (15, 15', 15") comprises a first transmitting ring (15) provided with said first main transmitting raceway (151) and a second transmitting ring (15') provided with said first secondary transmitting raceway (152).

4. Gearbox according to Claim 3,
**characterized in that** said at least one transmitting ring (15, 15', 15") comprising a second main transmitting raceway (153) in contact with said plurality of balls (14) of said second row (12) of balls in the nominal operating mode, said at least one transmitting ring (15, 15', 15") comprises a third transmitting ring (15") provided with said second main transmitting raceway (153) coming into contact in said nominal operating mode with said other plurality of balls (14) of said second row (12) of balls, said second transmitting ring (15') being provided with said second secondary transmitting raceway (154).

5. Gearbox according to any one of Claims 1 to 4,
**characterized in that** said at least one receiving ring (16) is a unitary component.

6. Gearbox according to any one of Claims 1 to 2,
**characterized in that** said at least one transmitting ring (25) is a unitary component.

7. Gearbox according to any one of Claims 1 to 2,
**characterized in that**, with said at least one transmitting ring (25) being a unitary component, said at least one receiving ring (26, 26', 26") comprises a first receiving ring (26) provided with a first secondary receiving raceway (262) and a second receiving ring (26') provided with a first main receiving raceway (261).

8. Gearbox according to Claim 7,
**characterized in that** said at least one receiving ring (26, 26', 26") comprises a third receiving ring (26") provided with a second secondary receiving raceway (264), said second receiving ring (26') being provided with a second main receiving raceway (263).

9. Aircraft (1) comprising at least one rotor (3, 3') provided with blades (4, 4') and at least one engine (6),
**characterized in that** said aircraft (1) comprises a gearbox (2, 2') according to any one of Claims 1 to 8, said gearbox (2, 2') transmitting an engine torque generated by said at least one engine (6) to said at least one rotor (3, 3'), said pitch control rod (5) being mechanically connected to at least one pitch lever (7) of said blades (4) of said at least one rotor (3).
